# EUROPEAN PATENT SPECIFICATION

(11) **EP 3 129 633 B1**
(45) Date of publication and mention of the grant of the patent: **02.05.2018**
(21) Application number: 15713970.0
(22) Date of filing: 23.03.2015
(51) Int. Cl.: F02M 21/02, F16K 5/04, B01F 15/04, F02D 9/16, F02M 35/10

(54) **FUEL VALVE**
KRAFTSTOFFVENTIL
SOUPAPE DE COMBUSTIBLE

(30) Priority: 11.04.2014 FI 20145346
(43) Date of publication of application: 15.02.2017
(73) Proprietor: Wärtsilä Finland Oy, 65380 Vaasa (FI)
(72) Inventor: SILLANPÄÄ, Hannu, FI-65100 Vaasa (FI); JUPPO, Pasi, FI-65100 Vaasa (FI)
(74) Representative: Berggren Oy, Helsinki & Oulu
(86) International application number: PCT/FI2015/050193
(87) International publication number: WO 2015/155408

(56) References cited:
- EP-A2- 0 106 699
- WO-A1-2013/105378
- DE-A1- 2 708 824
- DE-A1- 19 634 299

## Description

### Technical field of the invention

The present invention relates to a fuel valve for introducing gaseous fuel into an intake duct of a piston engine in accordance with the preamble of claim 1.

### Background of the invention

Lift valves are typically used in piston engines that are operated using gaseous fuel, such as natural gas, for introducing the fuel into the intake duct of the engine, where it mixes with the intake air. A problem related to the lift valves is that the high contact forces and surface pressure between the valve disc and the valve seat causes wear of the valves. Another type of fuel valve is shown in DE 2708824.

### Summary of the invention

The object of the present invention is to provide an improved fuel valve for introducing gaseous fuel into an intake duct of a piston engine. The characterizing features of the fuel valve according to the invention are given in the characterizing part of claim 1.

The fuel valve according to the invention comprises a first cylindrical part and a second cylindrical part, which is arranged coaxially inside the first cylindrical part. The cylindrical parts are rotatable relative to each other between a first position, in which position fuel flow through the fuel valve into an intake duct of the engine is allowed, and a second position, in which position fuel flow through the fuel valve into the intake duct is prevented.

The invention has several advantages. The construction is very simple and reliable and inexpensive to manufacture. The maximum flow area can be made large and a large amount of gaseous fuel can thus be introduced into the engine in a short period of time.

A fuel valve according to an embodiment of the invention comprises a first cylindrical part comprising a plurality of apertures being arranged around the perimeter of said first cylindrical part, and a second cylindrical part comprising a plurality of apertures being arranged around the perimeter of said second cylindrical part. The second cylindrical part is arranged coaxially inside the first cylindrical part and the cylindrical parts are rotatable relative to each other between a first position, in which position the apertures of the first cylindrical part and the second cylindrical part are at least partly aligned for allowing fuel flow from the fuel valve into an intake duct of the engine, and a second position, in which position fuel flow from the fuel valve through the apertures of the first cylindrical part and the second cylindrical part into the intake duct is prevented.

Since the apertures are located around the cylindrical parts, the fuel is effectively mixed with the intake air. Due to the construction, no force resisting the opening or closing of the valve is caused by pressure difference over the valve, and the energy demand of the valve is thus very low.

According to an embodiment of the invention, the first cylindrical part is stationary and the second cylindrical part is rotatable. The rotatable cylindrical part can be mounted on a bearing. The fuel valve can comprise means for rotating the cylindrical parts relative to each other. The means for rotating the cylindrical parts relative to each other can comprise a permanent magnet motor or a solenoid.

### Brief description of the drawings

The invention will be described below in more detail with reference to the accompanying drawings, in which
Fig. 1 shows a fuel valve according to an embodiment of the invention,
Fig. 2 shows a cross-sectional view of the valve of Fig. 1 taken along line A-A, and
Fig. 3 shows schematically a piston engine with fuel valves.

### Detailed description of the invention

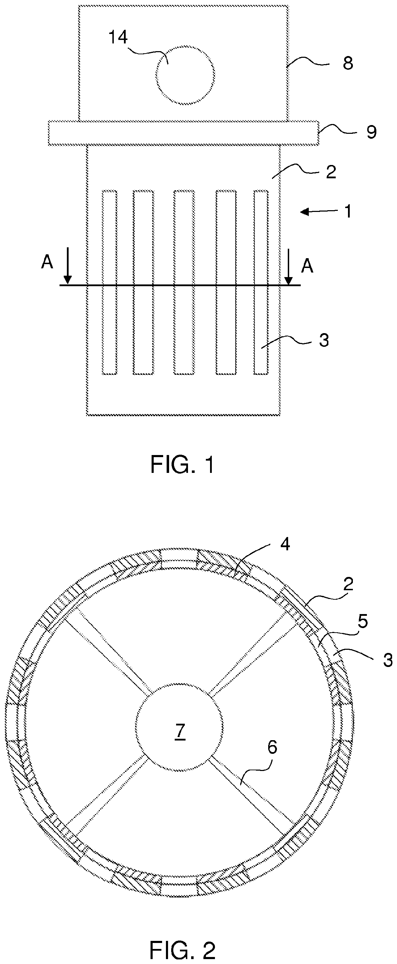

In figures 1 and 2 is shown a fuel valve 1 according to an embodiment of the invention. The valve 1 comprises a first cylindrical part 2 and a second cylindrical part 4. The first and the second cylindrical parts 2, 4 are arranged within each other so that the second cylindrical part 4 is inside the first cylindrical part 2. The first and the second cylindrical parts 2, 4 are coaxial and the outer diameter of the second cylindrical part 4 equals the inner diameter of the first cylindrical part 2. Tolerances of the cylindrical parts 2, 4 are chosen so that the parts 2, 4 are in close contact with each other preventing fuel leakage, but allowing their relative motion. The lower end of at least one of the cylindrical parts 2, 4 is closed.

In the embodiment shown in figures 1 and 2, the first cylindrical part 2 is stationary. The first cylindrical part 2 is provided with apertures 3 that are arranged around the circumference of the cylinder 2. In the embodiment of figures 1 and 2, the apertures 3 are slots that are parallel to the rotational axis of the cylindrical parts 2, 4. The apertures 3 are equally spaced around the circumference of the first cylindrical part 2.

The second cylindrical part 4 is rotatable in relation to the first cylindrical part 2. In the embodiment of figures 1 and 2, a permanent magnet motor 7 is arranged to rotate the second cylindrical part 4. The second cylindrical part 4 is attached by spokes or bars 6 to the shaft of the motor 7. Instead of the spokes 6, for instance one or more disc-shaped parts could be used for attaching the second cylindrical part 4 to the shaft of the motor 7. In a fuel valve 2 having a configuration similar to that shown in the figures, the disc-shape part needs to be provided with apertures for allowing gas flow through the disc. The apertures can be e.g. round holes or they can have some other shape or different shapes. An advantage of using a disc instead of spokes is that the constructions better withstands continuous quick movements. Also the second cylindrical part 4 is provided with apertures 5 that are arranged around the circumference of the cylinder 4. The apertures 5 are identical to the slots 3 of the first cylindrical part 2 and equally spaced around the circumference of the second cylindrical part 4. Instead of having a separate motor, the motor 7 could be integrated to the cylindrical parts 2, 4. In this case, the first cylindrical part 2 would be permanently magnetized forming the stator of the motor 7 and electrical current could be introduced into the second cylindrical part 4 that would work as the rotor of the electrical motor 7. The cylindrical parts 2, 4 would thus work as a step motor that rotates one step when current is switched on. By reversing the current, the motor rotates to the opposite direction. Also many other types of actuators, such as hydraulic or mechanical actuators, could be used for producing the relative motion of the cylindrical parts 2, 4.

Fuel is introduced into the fuel valve 1 through a valve body 8 that is provided with a fuel inlet 14. When the apertures 3, 5 of the first and the second cylindrical parts 2, 4 are aligned, as shown in figure 2, fuel can flow through the apertures 3, 5 into an intake duct of the engine. When the second cylindrical part 4 is rotated so that the apertures 3 of the second cylindrical part 4 are covered by the wall of the first cylindrical part 2, flow from the fuel valve 1 into the intake duct is prevented. In the embodiment of the figures, the cylindrical parts 2, 4 move only rotationally in relation to each other. Pressure difference over the fuel valve 1 does thus not resist opening or closing of the fuel valve 1. The valve body 8 is provided with a flange 9 for attaching the fuel valve 1 to the engine. In addition to the closed and open positions, the fuel valve 1 can have intermediate positions, where the apertures 3, 5 of the first and the second cylindrical part 2, 4 are only partially aligned and the flow from the fuel valve 1 into the intake duct is limited. The apertures 3, 5 do not need to be symmetrical and/or symmetrically arranged, but the apertures 3, 5 can be arranged so that when the cylindrical parts 2, 4 are rotated in relation to each other, the flow area through the apertures 3, 5 changes non-linearly. For instance, a certain rotation of the second cylindrical part 4 can be arranged to align only some of the apertures 3, 5 so that the flow area increases slower at the beginning of the opening movement of the fuel valve 1 than at the end of the opening movement. This makes the fuel flow through the fuel valve 1 easier to control.

The cylindrical parts 2, 4 can be coated with a material that reduces friction and/or wear. For instance nitriding treatment, diamond-like carbon (DLC) or similar coating can be used to reduce the friction between the parts 2, 4 and for increasing the life time of the parts. It is also possible to mount the second cylindrical part 4 with a bearing inside the first cylindrical part 2.

Instead of the fuel inlet 14 arranged above the flange 9 of the fuel valve 1, the fuel inlet 14 could be arranged below the flange 9. Alternatively, the apertures 3, 5 could work as the fuel inlets, through which the fuel could be introduced into the fuel valve 1. A fuel outlet or a number of fuel outlets would in that case be arranged in the bottom of the cylindrical parts 2, 4. For instance, each of the cylindrical parts 2, 4 could have an open base, or the base could be provided with one or more apertures. Only the part below the apertures 3, 5 would protrude into the intake duct, while the rest of the fuel valve 1 would be outside the intake duct. In case the apertures 3, 5 in the walls of the cylindrical parts 2, 4 function as fuel inlets, the bottoms of the first and the second cylindrical parts 2, 4 can be responsible for the on/off function of the fuel valve 1, whereas the apertures 3, 5 in the walls of the cylindrical parts 2, 4 can control the flow rate more precisely. Naturally, the apertures in the walls 3, 5 must be at least partly aligned in the first position for allowing fuel flow through the fuel valve 1. However, it is not necessary that apertures 3, 5 in the walls of the cylindrical parts 2, 4 are completely blocked in the second position.

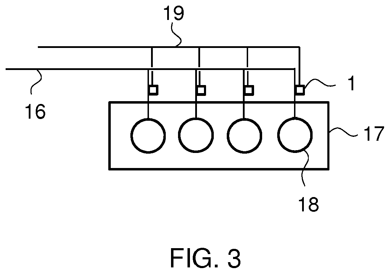

Figure 3 shows schematically a piston engine 17. The engine 17 comprises a number of cylinders 18 and an intake duct 16 for introducing intake air into the cylinders 18. The engine 17 is a large piston engine, such as a ship or a power plant engine. One fuel valve 1 is provided for each cylinder 18 of the engine 17. Each fuel valve 1 is arranged to introduce gaseous fuel into the intake duct 16 of the engine 17. The fuel valves 1 are connected to a fuel pipe 19, through which the fuel is supplied to the fuel valves 1. The fuel pipe 19 can be a double-walled pipe having an inner pipe for the fuel and an outer pipe for collecting fuel that may leak from the fuel system. Each fuel valve 1 is arranged in proximity to the intake valves of the respective cylinder 18 of the engine 17. The fuel valves 1 may be fixed to the intake duct 16 or to the cylinder heads of the engine 17.

It will be appreciated by a person skilled in the art that the invention is not limited to the embodiments described above, but may vary within the scope of the appended claims. For instance, the apertures can have different shape than the apertures in the embodiment of the figures. The apertures could be for example rectangular or circular. Instead of a permanent magnet motor, also a solenoid could be used as a valve actuator.

## Claims

1. A piston engine (17) comprising a plurality of cylinders (18) and a fuel valve (1) that is arranged to introduce gaseous fuel into an intake duct (16) of the engine (17), **characterized in that** a fuel valve (1) is provided for each cylinder (18) of the engine (17) and the fuel valve (1) comprises
- a first cylindrical part (2), and
- a second cylindrical part (4), which is arranged coaxially inside the first cylindrical part (2),
the cylindrical parts (2, 4) being rotatable relative to each other between
- a first position, in which position fuel flow through the fuel valve (1) into an intake duct (16) of the engine (17) is allowed, and
- a second position, in which position fuel flow through the fuel valve (1) into the intake duct (16) is prevented.

2. A piston engine (17) according to claim 1, **characterized in that** the perimeter of the first cylindrical part (2) is provided with a plurality of apertures (3) and the perimeter of the second cylindrical part (4) is provided with a plurality of apertures (5), and in the first mutual position of the cylindrical parts (2, 4) the apertures (3) of the first cylindrical part (2) are at least partly aligned with the apertures (5) of the second cylindrical part (4).

3. A piston engine (17) according to claim 2, **characterized in that** in the second mutual position of the cylindrical parts (2, 4) the apertures (3) of the first cylindrical part (2) are blocked by the second cylindrical part (4).

4. A piston engine (17) according to any of claims 1 to 3, **characterized in that** the bottom of the first cylindrical part (2) is provided with at least one aperture, and in the first mutual position of the cylindrical parts (2, 4) flow through the aperture(s) into the intake duct (16) is allowed, and in the second mutual position of the cylindrical parts (2, 4) the aperture(s) are blocked by the second cylindrical part (4) for preventing flow through the aperture(s).

5. A piston engine (17) according to any of the preceding claims, **characterized in that** the rotatable cylindrical part (2, 4) is mounted on a bearing.

6. A piston engine (17) according to any of the preceding claims, **characterized in that** the fuel valve (1) comprises a permanent magnet motor (7) for rotating the rotatable cylindrical part (2, 4).

7. A piston engine (17) according to any of the preceding claims, **characterized in that** the fuel valve (1) comprises a solenoid for rotating the rotatable cylindrical part (2, 4).

8. A piston engine (17) according to any of the preceding claims, **characterized in that** the first cylindrical part (2) is stationary and the second cylindrical part (4) is movable.

## Patentansprüche

1. Kolbenmotor (17), der mehrere Zylinder (18) und ein Kraftstoffventil (1) umfasst, das angeordnet ist, gasförmigen Kraftstoff in einen Ansaugkanal (16) des Motors (17) einzuleiten, **dadurch gekennzeichnet, dass** für jeden Zylinder (18) des Motors (17) ein Kraftstoffventil (1) bereitgestellt ist und das Kraftstoffventil (1) Folgendes umfasst
- einen ersten zylindrischen Teil (2), und
- einen zweiten zylindrischen Teil (4), der koaxial in dem ersten zylindrischen Teil (2) angeordnet ist,
wobei die zylindrischen Teile (2, 4) relativ zueinander drehbar zwischen
- einer ersten Stellung, in welcher ein Kraftstofffluss durch das Kraftstoffventil (1) in einen Ansaugkanal (16) des Motors (17) möglich ist, und
- einer zweiten Stellung, in welcher ein Kraftstofffluss durch das Kraftstoffventil (1) in den Ansaugkanal (16) verhindert ist, angeordnet sind.

2. Kolbenmotor (17) nach Anspruch 1, **dadurch gekennzeichnet, dass** die Umfassung des ersten zylindrischen Teils (2) mit mehreren Öffnungen (3) bereitgestellt ist und die Umfassung des zweiten zylindrischen Teils (4) mit mehreren Öffnungen (5) bereitgestellt ist, und in der ersten gegenseitigen Stellung der zylindrischen Teile (2, 4), die Öffnungen (3) des ersten zylindrischen Teils (2) mindestens teilweise mit den Öffnungen (5) des zweiten zylindrischen Teils (4) ausgerichtet sind.

3. Kolbenmotor (17) nach Anspruch 2, **dadurch gekennzeichnet, dass** die Öffnungen (3) des ersten zylindrischen Teils (2) in der zweiten gegenseitigen Stellung der zylindrischen Teile (2, 4) durch den zweiten zylindrischen Teil (4) blockiert sind.

4. Kolbenmotor (17) nach einem der Ansprüche 1 bis 3, **dadurch gekennzeichnet, dass** die Unterseite des ersten zylindrischen Teils (2) mit mindestens einer Öffnung bereitgestellt ist, und in der ersten gegenseitigen Stellung der zylindrischen Teile (2, 4) ein Durchfluss durch die Öffnung(en) in den Ansaugkanal (16) möglich ist, und in der zweiten gegenseitigen Stellung der zylindrischen Teile (2, 4) die Öffnung(en) durch den zweiten zylindrischen Teil (4) blockiert ist (sind), um einen Durchfluss durch die Öffnung(en) zu verhindern.

5. Kolbenmotor (17) nach einem der vorhergehenden Ansprüche, **dadurch gekennzeichnet, dass** der drehbare zylindrische Teil (2, 4) auf einem Lager montiert ist.

6. Kolbenmotor (17) nach einem der vorhergehenden Ansprüche, **dadurch gekennzeichnet, dass** das Kraftstoffventil (1) einen Permanentmagnetmotor (7) zum Drehen des drehbaren zylindrischen Teils (2, 4) umfasst.

7. Kolbenmotor (17) nach einem der vorhergehenden Ansprüche, **dadurch gekennzeichnet, dass** das Kraftstoffventil (1) ein Solenoid zum Drehen des drehbaren zylindrischen Teils (2, 4) umfasst.

8. Kolbenmotor (17) nach einem der vorhergehenden Ansprüche, **dadurch gekennzeichnet, dass** der erste zylindrische Teil (2) ortsfest und der zweite zylindrische Teil (4) bewegbar ist.

## Revendications

1. Moteur à piston (17) comprenant une pluralité de cylindres (18) et une vanne à carburant (1) qui est conçue pour introduire du carburant gazeux dans une conduite d'admission (16) du moteur (17), **caractérisé en ce qu'**une vanne à carburant (1) est prévue pour chaque cylindre (18) du moteur (17) et que la vanne à carburant (1) comprend
- une première pièce cylindrique (2), et
- une seconde pièce cylindrique (4) qui est disposée axialement à l'intérieur de la première pièce cylindrique (2),
les pièces cylindriques (2, 4) pouvant tourner l'une par rapport à l'autre entre
- une première position, dans laquelle position un écoulement de carburant à travers la vanne à carburant (1) jusque que dans la conduite d'admission (16) du moteur (17) est permis, et
- une seconde position, dans laquelle position un écoulement de carburant à travers la vanne à carburant (1) jusque dans la conduite d'admission (16) est inhibé.

2. Moteur à piston (17) selon la revendication 1, **caractérisé en ce que** le périmètre de la première pièce cylindrique (2) est pourvu d'une pluralité d'orifices (3) et le périmètre de la seconde pièce cylindrique (4) est pourvu d'une pluralité d'orifices (5) et, dans la première position mutuelle des pièces cylindriques (2, 4), les orifices (3) de la première pièce cylindrique (2) sont au moins partiellement alignés avec les orifices (5) de la seconde pièce cylindrique (4).

3. Moteur à piston (17) selon la revendication 2, **caractérisé en ce que**, dans la seconde position mutuelle des pièces cylindriques (2, 4), les orifices (3) de la première pièce cylindrique (2) sont bloqués par la seconde pièce cylindrique (4).

4. Moteur à piston (17) selon l'une quelconque des revendications 1 à 3, **caractérisé en ce que** le fond de la première pièce cylindrique (2) est pourvu d'au moins orifice et, dans la première position mutuelle des pièces cylindriques (2, 4), un écoulement à travers le ou les orifices jusque dans la conduite d'admission (16) est permis et que, dans la seconde position mutuelle des pièces cylindriques (2, 4), l'orifice ou les orifices sont bloqués par la seconde pièce cylindrique (4) pour empêcher l'écoulement à travers l'orifice ou les orifices.

5. Moteur à piston (17) selon l'une quelconque des revendications précédentes, **caractérisé en ce que** la pièce cylindrique rotative (2, 4) est montée sur un palier.

6. Moteur à piston (17) selon l'une quelconque des revendications précédentes, **caractérisé en ce que** la vanne à carburant (1) comprend un moteur à aimant permanent (7) pour faire tourner la pièce cylindrique rotative (2, 4).

7. Moteur à piston (17) selon l'une quelconque des revendications précédentes, **caractérisé en ce que** la vanne à carburant (1) comprend un solénoïde pour faire tourner la pièce cylindrique rotative (2, 4).

8. Moteur à piston (17) selon l'une quelconque des revendications précédentes, **caractérisé en ce que** la première pièce cylindrique (2) est stationnaire et la seconde pièce cylindrique (4) est mobile.
